(19) Europäisches Patentamt
European Patent Office
Office européen des brevets

(11) EP 4 693 120 A1

(12) **EUROPEAN PATENT APPLICATION**
published in accordance with Art. 153(4) EPC

(43) Date of publication:
**11.02.2026 Bulletin 2026/07**

(21) Application number: **24778718.7**

(22) Date of filing: **08.02.2024**

(51) International Patent Classification (IPC):
***G06N 20/00*** *(2019.01)* ***G06F 11/36*** *(2025.01)*
***G06Q 10/0635*** *(2023.01)*

(52) Cooperative Patent Classification (CPC):
**G06F 11/36; G06N 5/02; G06N 20/00;**
**G06Q 10/0635; G06Q 40/03**

(86) International application number:
**PCT/JP2024/004236**

(87) International publication number:
**WO 2024/202573 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.03.2023 JP 2023053910**

(71) Applicant: **Fujitsu Limited**
**Kawasaki-shi, Kanagawa 211-8588 (JP)**

(72) Inventors:
- **KANEKO, Mayuko**
  **Kawasaki-shi, Kanagawa 211-8588 (JP)**
- **ONODERA, Sachiko**
  **Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **EVALUATION PROGRAM, EVALUATION METHOD, AND INFORMATION PROCESSING DEVICE**

(57) An evaluation program causing a computer to execute processes of identifying a plurality of sets of constituents that are related to each other on the basis of configuration information including stakeholders of an artificial intelligence (AI) system, selecting one or more rules from among a plurality of rules on the basis of a limitation condition for the constituent, determining priorities of the plurality of specified sets on the basis of the one or more selected rules, and outputting an AI ethical risk evaluation result of the AI system on the basis of the determined priorities.

FIG.11

Rule Based on Past Incident Cases

202

| Number | Risk of AI System | | | | | | Limitation Condition | Information of Interaction in System Diagram | |
|---|---|---|---|---|---|---|---|---|---|
| | Case Name | Severity of Damage | | | | Unequal Damage (Fairness Item) | | Interaction Start Point Type | Interaction End Point Type |
| | | Physical Damage | Economic Damage | Mental Damage | Response Time to Resolution | | | | |
| 001 | Accident of Medical Assistant AI | High | Medium | High | Long | None | None | AI Model | Inference Result |
| 002 | Cold Treatment in Loan Examination AI | Low | High | Medium | Short | Gender | Gender Limitation | Inference Result | Consumer User |
| 003 | Crime Prediction AI | Low | Low | Low | Medium | Race | Race Limitation | AI Model | Inference Result |
| ... | ... | ... | ... | ... | ... | ... | ... | ... | ... |
| 328 | Racist Remarks at BOT | Low | Low | High | Medium | Nationality | Nationality Limitation | Inference Result | Consumer User |

D2

EP 4 693 120 A1

## Description

[Technical Field]

The present embodiment relates to an evaluation program, an evaluation method, and an information processing apparatus.

[Background Art]

Ethical risk assessment may be performed in artificial intelligence (AI) systems.

Use of AI systems of various industry types and tasks may cause ethical problems. When such a problem occurs, not only a company or an organization providing an AI system but also a user of the AI system and society beyond are greatly affected.

Therefore, in implementing AI in society, efforts have been made to recognize and deal with ethical risks.

However, since an AI system has a plurality of stakeholders and the social situation surrounding them changes, it may be difficult to detect what kind of ethical problem will occur by using the AI system. Note that the stakeholders of the AI system are interested parties in the AI system, and may include, for example, providers of the AI system (including designers, developers, and the like), users of the AI system, and providers of data for the AI system.

Therefore, the check list itself indicated by the principles and guidelines regarding AI ethics may be applied to the AI system and its stakeholders and analyzed.

Examples of principles and guidelines related to AI ethics include "European High-Level Expert Group on AI (AI HLEG) "Ethics Guidelines for Trustworthy AI"", "the Ministry of Internal Affairs and Communications AI Utilization Guidelines", "Joint Innovative Strategy Promotion Meeting "Human-Centric Social Principles for AI″", and "OECD "Recommendation of the Council on Artificial Intelligence"".

In addition, a "risk chain model (RCModel)" has been proposed as a model that contributes to examination of risk control regarding an AI service of an AI service provider, while considering the existence of various forms of AI service provision.

In the risk chain model, risk constituents are organized and structured according to the following (1) to (3).

(1) Technical constituents of an AI system
(2) Constituents related to the code of conduct of a service provider (including communication with users)
(3) Constituents related to user's understanding, behavior, and usage environment

In addition, in the risk chain model, identification of risk scenarios, specification of risk factor constituents, visualization of risk chains, and examination of risk control are performed. In the visualization of risk chains and examination of risk control, an AI service provider is able to examine risk reduction in stages by visualizing the relationship (risk chain) of the constituents related to the risk scenario.

AI systems are being developed every day, and various incident cases are also increasing in proportion thereto.

In order to take advantage of such past incident cases accumulated every day, it is assumed that the check items are prioritized by newly using the past incident cases as rules.

[Prior Art Reference]

[Patent Document]

[Patent Document 1]
WO 2020/240981 A
[Patent Document 2]
JP 2018-190182 A
[Patent Document 3]
WO 2021/199201 A

[Non Patent Document]

[Non Patent Document 1]
Takashi Matsumoto, Arisa Ema, "Proposal of Risk Chain Mod el to Examine Risk Reduction in AI Services", June 4, 2020, In ternet <URL:ifi.u-tokyo.ac.jp/wp/wp-content/uploads/2020/06/ policy_recommendation_tg_20200604.pdf>

[Summary of the Invention]

[Problems to be Solved by the Invention]

However, in a case where a limitation condition is applied to a component in an AI system that is an evaluation target, there is a case that it is meaningless to adopt a rule among rules based on past incident cases. Therefore, there is a possibility that a check item with higher priority fails to be extracted.

For example, in the adoption determination AI, the condition A "employment of both men and women", the condition B "employment of only women", and the like are assumed. Since there is a reasonable reason for "only women being employed" for a person in charge of female medical checkups, it is meaningless to adopt the check items regarding gender discrimination due to the gender limitation condition of the condition B.

Furthermore, for example, in monitoring camera AI, the condition C "monitor all people", the condition D "monitor only Caucasian", and the like are assumed. Since there is a reasonable reason for the fugitive wanting to search on the basis of the witness information of "Caucasian", it is meaningless to adopt the check items regarding racism due to the racial limitation condition of the condition D.

In one aspect, an object is to enable extraction of a high-priority check item according to a case in coping with an ethical risk of an AI system.

[Means to Solve the Problem]

According to an aspect of embodiment(s), an evaluation program causing a computer to execute processes of identifying a plurality of sets of constituents that are related to each other on the basis of configuration information including stakeholders of an artificial intelligence (AI) system, selecting one or more rules from among a plurality of rules on the basis of a limitation condition for the constituent, determining priorities of the plurality of specified sets on the basis of the one or more selected rules, and outputting an AI ethical risk evaluation result of the AI system on the basis of the determined priorities.

[Effect of Invention]

In one aspect, it is possible to extract a high-priority check item according to a case in coping with an ethical risk of an AI system.

[Brief Description of Drawings]

Fig. 1 is a block diagram exemplifying an analysis diagram as output data in a related example.
Fig. 2 is a diagram illustrating loan examination interaction in a related example.
Fig. 3 is a diagram illustrating a generation example of a graph structure from an analysis sheet in a related example.
Fig. 4 is a block diagram schematically illustrating a software configuration example of an information processing apparatus in a related example.
Fig. 5 is a flowchart illustrating a process of generating an AI ethics check list in a related example.
Fig. 6 is a table exemplifying damage based on past incident cases.
Fig. 7 is a table exemplifying a rule based on past incident cases.
Fig. 8 is a table exemplifying a generalized rule.
Fig. 9 is a diagram for describing a process of applying a limitation condition for a component in an embodiment.
Fig. 10 is a diagram exemplifying a system diagram to which a limitation condition is applied in the embodiment.
Fig. 11 is a diagram illustrating an example of excluding a limitation condition from a rule based on the past incident cases illustrated in Fig. 7.
Fig. 12 is a block diagram schematically illustrating a hardware configuration example of an information processing apparatus according to the embodiment.
Fig. 13 is a block diagram schematically illustrating a software configuration example of the information processing apparatus according to the embodiment.
Fig. 14 is a flowchart for describing details of a process of generating an AI ethics check list in the embodiment.

DESCRIPTION OF EMBODIMENT(S)

[A] Related Example

Fig. 1 is a block diagram illustrating an analysis diagram as output data in a related example.

The ethical risks surrounding AI are extracted and visualized in association with the relationship (interaction) between any two parties of components of an AI system and stakeholders.

In the analysis diagram illustrated in Fig. 1, a corresponding AI ethics check item, if any, is indicated in association with each of interaction IDs (S101 to S114) indicated in the system diagram including a training unit 110 and a prediction unit 120 (both will be described later with reference to Fig. 2). In addition, either of a risk event (see the one-dot chain line frame in Fig. 1) and a risk factor (see the dotted line frame in Fig. 1) is indicated in association with each AI ethics check item.

In the example illustrated in Fig. 1, the AI ethics check items "group fairness" and "controllability of inference result" are indicated in association with S110, and the AI ethics check items "sufficiency of data attribute" and "validity of label" are indicated in association with S111. The AI ethics check item "sufficiency of data attribute" is indicated in association with S112, and the AI ethics check items "independence of inference result" and "appropriateness of machine learning/statistical analysis" are indicated in association with S113. The AI ethics check item "controllability of inference result" is indicated in association with S114.

Fig. 2 is a diagram illustrating loan examination interaction in a related example.

In the related example, the ethical characteristics that an AI system 100 has to have are made into a check list in association with a relationship between the AI system 100 and stakeholders, and the ethical risk of the AI system 100 is analyzed by using the AI ethics check list. As a result, there is no need for an AI service provider 10 or a developer to perform the work of breaking down into the items to be put into practice for the components of the AI system 100 or the individual stakeholders.

In addition, the relationship between the constituents of the AI system 100 and the stakeholders is graphically structured, and an AI ethics check list in which priority is given to AI ethics check items is automatically generated on the basis of features of the graph structure. As a result, efficiency is improved by preferentially analyzing important AI ethics check items.

The AI system 100 illustrated in Fig. 2 exemplifies interaction of the loan examination AI. Arrows in Fig. 1 indicate interactions. Both ends of the interaction (a start point and an end point) are elements of any of the stakeholder, data, and components of the AI system. A type of interaction is defined by roles of elements (a data provider, a user 40, training data 101, a loan examination model 103, and the like) corresponding to a start point and an end point of interaction. Sxxx attached to each interaction indicates an interaction ID.

The AI system 100 is used by an AI service provider 10 such as an AI service vendor, a data provider 20 such as a credit investigation organization, a data provider 30 such as a bank, and a user 40 such as a loan applicant.

The training unit 110 includes a loan examination model generation unit 102 (in other words, a machine learning unit) that trains a loan examination model 103 (in other words, an AI model) through machine learning for the training data 101. The training data 101 may be generated by inputting a credit score from the data provider 20 or inputting transaction data from the data provider 30.

The prediction unit 120 includes an inference unit 105 that performs inference on inference data 104 by using the loan examination model 103 to output an examination result 106 (in other words, an inference result). The inference data 104 may be generated by input/output of a credit score from the data provider 20, input/output of application information and transaction data from the data provider 30, and input of applicant information from the user 40.

Fig. 3 is a diagram illustrating a generation example of a graph structure from an analysis sheet in a related example.

In an analysis sheet denoted by the reference sign A1, the type, the name, role explanation, and distinction between start point/end point of a stakeholder, the type, the name, distinction between start point/end point of data, and the like are associated with each interaction ID.

For example, the interaction ID "S101" is associated with the type "user", the name "loan applicant", the role explanation "provision of applicant information", and distinction between start point/end point "0 (start point)" of a stakeholder. In addition, the interaction ID "S101" is associated with the data type "inference result", the data name "applicant information (transaction data and credit score)", and distinction between start point/end point "1 (end point)".

Here, a process of analyzing an AI ethical risk in the related example will be described.

The risk analysis is performed according to the following procedures (1) to (4).

(1) Relationships between constituents of the AI system 100, data, and stakeholders are plotted as a system diagram (see Fig. 1), and interactions are extracted.

(2) A breakdown for each interaction is written in an analysis sheet (see the reference sign A1 in Fig. 3).

(3) For each item of the AI ethics check list (not illustrated) generated on the basis of the AI ethics model, a risk (risk event/risk factor) assumed from a state in which the corresponding interaction does not satisfy the check item is extracted and written in the analysis sheet. Note that the AI ethics model is configured as a list of check items to be satisfied by the AI system 100 by organizing principles, guidelines, and the like regarding AI ethics.

(4) The risk in the analysis sheet is referred to, risks having same content are organized, and a relationship between an event and a factor is written. In the case of visualization, an analysis diagram (not illustrated) in which risk events and factors are added to the system diagram is created.

That is, the system diagram, the analysis sheet, and the analysis diagram are output as output data.

In the above risk analysis procedure (3), since there are many items of the AI ethics check list, the number of man-hours for verifying all the check lists is large. Therefore, regarding the procedure (3) of the risk analysis, a process of generating a prioritized AI ethics check list is executed by an information processing apparatus 6 (that will be described later with reference to Fig. 4).

In the AI ethics check list generation process, a relationship (interaction) between any two parties of the AI system 100 that is an analysis target and a stakeholder is expressed in a graph structure by the information processing apparatus 6. From the characteristics of the graph structure, a relationship (interaction) with high importance that is to be noted ethically is extracted on a rule basis, and a check item for extracting an ethical risk associated with the relationship (interaction) with high importance is presented by the information processing apparatus 6 as a prioritized check list.

The information processing apparatus 6 in the related example narrows down the AI ethics check list. In the narrowing down of the AI ethics check list, features of the "relationship between the configuration of the AI system and the stakeholder" are expressed as features of a graph structure including a set of interactions.

The table data of the analysis sheet being in a data format of the "interaction set" enables the graph structure to be automatically generated. As features of the graph structure, for example, the following is able be automatically extracted.

· Number of stakeholder nodes
· Number of stakeholders having multiple roles
Number of stakeholders not directly involved with AI system

Features of the graph structure where the occurrence of an ethical risk is likely to occur and items of the AI ethics check list to be suppressed are registered in advance as rules. For example, in a case where there is one or more stakeholders that are not directly involved with the AI system 100, the priority of interaction involved with the stakeholders is increased. This is to ascertain the indirect influence on the stakeholders that is likely to be overlooked in the design and development of the AI system 100.

On the basis of the registered rule from the features of the graph structure, AI ethics check items with high importance are narrowed down and generated as a prioritized AI ethics check list.

A graph structure denoted by the reference sign A2 may be generated from the analysis sheet denoted by the reference sign A1 in Fig. 3.

In the graph structure denoted by the reference sign A2, an arrow between nodes indicated by circles represents interaction.

In the example illustrated in Fig. 3, the output of the applicant information from the loan applicant is represented by S101, the input of the applicant information to the bank is represented by S102, and the input of the applicant information to the credit investigation organization is represented by S103. Further, the output of the applicant information, the transaction data, and the credit score from the bank is represented by S104, and the output of the applicant information, the transaction data, and the credit score from the credit investigation organization is represented by S105. Furthermore, the input from the applicant information, the transaction data, and the credit score to the loan examination inference unit is represented by S106, and the output of the examination data from the loan examination inference unit is represented by S107. The loan examination inference unit is an example of the inference unit 105 illustrated in FIG. 2.

As indicated by the reference sign A11, a role (the type of a stakeholder) is registered in each of the stakeholders, and as indicated by the reference sign A21, each node such as a loan applicant has a role.

Here, the information processing apparatus 6 (that will be described later with reference to Fig. 4) extracts an interaction having a high importance that is to be noted in the following order of (1) to (3).

(1) The importance levels of all the interactions are set to one point.
(2) A point is added to an importance level of an interaction having specific features (one point may be added per feature).
(3) The interactions are ranked by importance.

The specific features in the above (2) may include features of nodes (components of the AI system 100, data, and stakeholders) at both ends of the interaction and features of a connection relationship. The features of the nodes at both ends of the interaction may include a stakeholder having a plurality of roles (an AI system provider and a data provider) , a stakeholder having a user role, and a stakeholder having a training data provider role. The features of the connection relationship may include an interaction of a stakeholder that is not connected to the output of the AI system 100 and an interaction in which training data or inference data is connected to a plurality of data providers.

Fig. 4 is a block diagram schematically illustrating a software configuration example of the information processing apparatus 6 in the related example.

The information processing apparatus 6 in the related example functions as a graph generation unit 111, a feature extraction unit 112, and a check item extraction unit 113.

The graph generation unit 111 acquires a plurality of pieces of relationship information (in other words, interactions) including at least two attributes of an attribute of the type of a target person, an attribute of the type of processing, and an attribute of the type of data, which are determined on the basis of the configuration of the AI system 100. The graph generation unit 111 may acquire the relationship information on the basis of an interaction set 141 that is an analysis target. The graph generation unit 111 may generate the graph structure illustrated in Fig. 3 on the basis of the acquired relationship information.

The feature extraction unit 112 determines priorities of the plurality of pieces of relational information on the basis of the attribute of the type of the target person. The feature extraction unit 112 may determine the priorities on the basis of an important interaction extraction rule 142. The feature extraction unit 112 may increase the priority of a specific target person related to each of the plurality of pieces of relational information. The feature extraction unit 112 may increase the priority of specific relationship information among the plurality of pieces of relationship information.

The check item extraction unit 113 outputs one or a plurality of check items selected on the basis of the determined priority among a plurality of check items associated with each attribute as an AI ethics check list 114 narrowed down by the AI system 100.

A process of generating the AI ethics check list in the related example will be described with reference to a flowchart (steps C1 to C8) of Fig. 5.

The graph generation unit 111 receives the important interaction extraction rule 142, the AI ethics check list 143, and the interaction set 141 that is an analysis target, as input data (steps C1 to C3).

The graph generation unit 111 generates a graph structure from the interaction set 141 (step C4).

The feature extraction unit 112 extracts features from the graph structure (step C5). The extraction of the features may be executed on the basis of, for example, the number of nodes of the stakeholders, the number of stakeholders having a plurality of roles, and the number of stakeholders not directly involved with the AI system 100.

The feature extraction unit 112 extracts an interaction to be noted from the extracted features on the basis of the important interaction extraction rule 142 (step C6).

The check item extraction unit 113 extracts a check item of the AI ethics check list 143 corresponding to the interaction to be noted (step C7).

The check item extraction unit 113 outputs the AI ethics check list 143 in which important items are narrowed down (step C8). The process of generating the AI ethics check list 143 ends.

[B] Embodiment

Hereinafter, an embodiment will be described with reference to the drawings. However, the embodiments described below are merely examples, and there is no intention to exclude the application of various modifications and techniques that are not explicitly described in the embodiments. That is, the present embodiment can be variously modified and implemented without departing from the gist thereof. Each drawing is not intended to include only the constituents illustrated in the drawing but may include other functions and the like.

In the related example described above, in the process of generating the AI ethics check list, a priority is given to an interaction according to the rule of the feature (for example, features regarding a role of a stakeholder) of the graph structure that is regarded as an important interaction in which an ethical risk is likely to occur, and the AI ethics check list is narrowed down.

On the other hand, in the embodiment, in coping with the ethical risk of the AI system, rules that are meaningless to adopt (in other words, the check item) are removed by discriminating the adoption/non-adoption of the rules with limitation conditions. That is, in the AI system that is an evaluation target, a rule that is meaningless to adopt is determined not to be adopted according to the limitation condition for the component, and the priority of the extraction of the AI ethics check item is increased for the target interaction by using the remaining rules determined to be adopted.

Fig. 6 is a table illustrating damage 201 based on past incident cases.

As a risk of the AI system, in particular, there is a magnitude of damage in past incident cases and unequal damage (race, gender, etc.) related to fairness and privacy.

In Fig. 6, for example, there are an item example "high" and a specific example "human life is lost" as the item "severity of damage (physical damage)", and there are an item example "high" and a specific example "loss of several hundred million to several trillion yen" as the item "severity of damage (economic damage)". In addition, for example, there are an item example "long" and a specific example "it takes more than two or three years" as the item "severity of damage (response time to resolution)", and there are an item example "race" and a specific example "Caucasian/blacks" as the item "unequal damage".

Fig. 7 is a table illustrating a rule 202 based on past incident cases.

In the rule 202 based on the past incident cases, the content of the damage, the limitation condition, and the information of the interaction in the system diagram are registered in association with each case name of the risk generated in the AI system.

The limitation condition indicates a limitation condition for the component in the system diagram, and the "limitation condition" added to the component is written in advance in the table data of the past rule. The notation of the limitation condition may be unified in advance.

In addition, the information of the interaction in the system diagram is information indicating which interactions occur between each of the stakeholders, the data, the model, the result, and the output component only in a portion related to the rule.

In Fig. 7, for example, in the number "001", a case name "medical assistance AI accident", physical damage "high", economic damage "medium", mental damage "high", a response time to resolution "long", unequal damage (fairness item) "none", a limitation condition "none", an interaction start point type "AI model", and an interaction end point type "inference result" are registered in association with each other.

Furthermore, in Fig. 7, for example, in the number "002", a case name "cold treatment in loan examination AI", physical damage "low", economic damage "high", mental damage "medium", response time to resolution "short", unequal damage (fairness item) "gender", a limitation condition "gender limitation", an interaction start point type "inference result", and an interaction end point type "consumer user" are registered in association with each other.

Fig. 8 is a table exemplifying a generalized rule 203.

The generalized rule 203 may be defined by adding an importance level of an interaction having features of nodes at both ends of the interaction or features of a connection relationship.

The features of the nodes (for example, components of the AI system, data, and stakeholders) at both ends of the interaction include, for example, the following.

Stakeholder having multiple roles (for example, an AI system provider and a data provider)

·Stakeholder having user role
·Stakeholder having training data provider role

The features of the connection relationship include, for example, the following.

Interaction of stakeholder not linked to output of AI system
Interaction in which training data or inference data is linked to multiple data providers

In the generalized rule 203 illustrated in Fig. 8, in addition to the generalized rule and the information of the interaction in the system diagram, a limitation condition is registered in association with each other.

In Fig. 8, for example, in the number "0001", a generalized rule name "stakeholder (1) having a role of a user (1)", a limitation condition "none", an interaction start point type "inference result", and an interaction end point type "business user" are registered in association with each other.

Furthermore, in Fig. 8, for example, in the number "0002", a generalized rule name "stakeholder (2) having a role of a user", a limitation condition "gender, race, nationality", an interaction start point type "business user", and an interaction end point type "consumer user" are registered in association with each other.

Fig. 9 is a diagram for describing a process of applying a limitation condition for a component in the embodiment.

In the present embodiment, a limitation condition for a component is applied to a system diagram serving as an input of the AI ethical influence evaluation. The AI system acquires the limitation condition for the component from the system diagram.

In Fig. 9, in employment determination AI, a job seeker provides his/her own information to the AI system (in other words, an employment destination company or the like) as an inference data provider, and receives the employment determination from the AI system as a determination target person.

In the example indicated by the reference sign B1, a limitation condition for the job seeker is not applied, but in the example indicated by the reference sign B2, the gender of the job seeker is limited, and the limitation condition is applied.

Since the case corresponding to the limitation condition is a case that is meaningless to adopt, the AI system excludes the case from the table data of the rule 202 based on the past incident cases illustrated in Fig. 7.

The AI system scores the priority of the check item extraction by using the table data of the rule 202 based on the past incident cases on which the exclusion processing has been performed.

In the scoring related to the priority determination in the case of using the rule 202 based on the past incident cases, it is assumed that the larger the damage is, the more dangerous it is.

For example, in the "severity of damage (physical damage)" in the table data of the rule 202 based on the past incident cases, scoring of the interaction is performed in stages by applying 3 points to "high", 2 points to "medium", and 1 point to "low".

Note that how to define the "severity of damage" in the past incident cases may be determined by an AI system developer. As the "severity of damage", a plurality of measures such as "physical damage", "economic damage", "mental damage", and "response time to resolution" may be prepared. Even in the same case, the table of the rule 202 based on the past incident cases may be changed depending on what of the damage is defined as important by the AI system developer. As a result, the priority may be changed even in the same case.

In a case where there is no "severity of damage" that is emphasized, a plurality of pieces of "severity of damage" may be all added (or multiplied) equally.

In a case where a rule in which the generalized rule 203 illustrated in Fig. 8 and the rule 202 based on the past incident cases illustrated in Fig. 7 are mixed is adopted, the following method may be used.

The scoring (A) of the generalized rule 203 is added (or multiplied).

Here, at the time of addition (or multiplication), there is a case where the range (A) of the score prioritized on the basis of the generalized rule 203 and the range (B) of the score assigned in the rule 202 based on the past incident cases are greatly separated from each other. As a method of coping with the case where the ranges are greatly separated, normalization of the minimum value of 0 and the maximum value of 1 may be performed for each of (A) and (B) for the purpose of aligning the ranges of the scores. Then, the normalized (A) and (B) may be added (or multiplied), and the priority of the AI ethics check item may be determined on the basis of an addition value.

Fig. 10 is a diagram illustrating a system diagram to which a limitation condition is applied in the embodiment.

A system diagram of an AI system 100a for employment determination illustrated in Fig. 10 includes interactions (S101 to S114) indicated in the system diagram including the training unit and the prediction unit (both are similar to those described above with reference to Fig. 2, and description thereof will be omitted). Components (in other words, stakeholders) such as an inference data provider and a training data provider are connected via each interaction.

In Fig. 10, a system diagram in which "gender limitation" (for example, female conditions) is assigned instead of "all job seekers" is created for determination target persons of the system diagram of the employment determination AI.

As indicated by the reference sign D1, the AI system 100a extracts a limitation condition for "gender limitation" as an exclusion condition from the components in the system diagram.

Fig. 11 is a diagram illustrating an example of excluding the limitation condition from the rule 202 based on the past incident cases illustrated in Fig. 7.

As indicated by the reference sign D2 in Fig. 11, the AI system refers to the rule 202 based on the past incident cases illustrated in Fig. 7, and excludes the row of the case in which the limitation condition "gender limitation" is written from the target of the current AI ethical influence evaluation.

The AI system adds a point to the interaction of the extracted past incident case (in other words, an interaction that remains without being excluded in the rule 202 based on the past incident cases) and increases the priority. For example, points may be added to the interaction "AI model → inference result" with the numbers "001" and "003" illustrated in Fig. 11.

For example, the AI system may add three points to the interaction (AI model → inference result) regarding the evaluation "high" of "severity of damage (physical damage)" in the number "001". In addition, two points may be added to the evaluation "medium", and one point may be added to the evaluation "low".

In a case where there is no "severity of damage" that is emphasized, the AI system may calculate a total of 16 points by equally adding all the indexes (physical damage, economic damage, mental damage, and time to resolution) as follows.

$$\text{Number "001"}: 3 + 2 + 3 + 3 = 11$$

$$\text{Number "003"}: 1 + 1 + 1 + 2 = 5$$

In a case where it is desired to place importance on "economic damage", the AI system may weight two points of the evaluation "medium" of the number "001" and one point of the evaluation "low" of the number "003" with respect to the "severity of damage (economic damage)", and add a total of six points that is twice the score to the interaction of "AI model → inference result".

The AI system ranks the interactions in descending order of scores, and extracts a check item with high priority.

As a result, it is possible to extract a check item with high priority when there is a limitation condition for the component of the system diagram, which is not sufficiently extracted according to the conventional rule based on constituents.

In a case where the rule in which the generalized rule 203 and the rule 202 according to the past incident illustrated in Fig. 8 are mixed is adopted, the evaluation (the score of the prioritization) may be normalized as follows.

(A) In the prioritization based on the graph structure of the prior patent, it is assumed that one point is already added to the interaction of "AI model → inference result". The range of the evaluation group in (A) is set to 0 to 2.
(B) On the other hand, it is assumed that 16 points are added to the interaction of "AI model → inference result" from the viewpoint of the severity of damage. The range of the evaluation group in (B) is set to 0 to 20.
(A) and (B) are normalized with the minimum value of 0 and the maximum value of 1. (A) The number of interactions of "AI model → inference result" in (B) is 0.5, and the number of interactions of "AI model → inference result" in (B) is 0.8.

After normalization, (A) and (B) are added together to obtain (A) + (B) =1.3 points. This is the score of the priority assigned to the interaction of "AI model → inference result" of the AI system that is an evaluation target.

Scores are similarly calculated for other interactions.

The scores of the respective interactions are compared, and a priority is set to be higher in descending order of the scores.

Fig. 12 is a block diagram schematically illustrating a hardware configuration example of an information processing apparatus 1 according to the embodiment.

As illustrated in Fig. 12, the information processing apparatus 1 includes a central processing unit (CPU) 11, a memory unit 12, a display control unit 13, a storage device 14, an input interface (IF) 15, an external recording medium processing unit 16, and a communication IF 17.

The memory unit 12 is an example of a storage unit, and is, for example, a read only memory (ROM) or a random access memory (RAM). A program such as a basic input/output system (BIOS) may be written in the ROM of the memory unit 12. The software program of the memory unit 12 may be appropriately read and executed by the CPU 11. In addition, the RAM of the memory unit 12 may be used as a temporary recording memory or a working memory.

The display control unit 13 is connected to a display device 131 and controls the display device 131. The display device 131 is a liquid crystal display, an organic light-emitting diode (OLED) display, a cathode ray tube (CRT), an electronic paper display, or the like, and displays various types of information to an operator or the like. The display device 131 may be combined with an input device, and may be, for example, a touch panel. The display device 131 displays various types of information to a user of the information processing apparatus 1.

The storage device 14 is a high-IO performance storage device, and for example, a dynamic random access memory (DRAM), a solid state drive (SSD), a storage class memory (SCM), or a hard disk drive (HDD) may be used.

The input IF 15 may be connected to an input device such as a mouse 151 or a keyboard 152 to control the input device such as the mouse 151 or the keyboard 152. The mouse 151 and the keyboard 152 are examples of the input devices, and the operator performs various input operations via these input devices.

The external recording medium processing unit 16 is configured such that a recording medium 160 is able be mounted. The external recording medium processing unit 16 is configured to be able to read information recorded on the recording medium 160 in a state in which the recording medium 160 is mounted. In this example, the recording medium 160 is portable. For example, the recording medium 160 is a flexible disk, an optical disk, a magnetic disk, a magneto-optical disk, a semiconductor memory, or the like.

The communication IF 17 is an interface that enables communication with an external device.

The CPU 11 is an example of a processor, and is a processing device that performs various controls and calculations. The CPU11 implements various functions by executing an operating system (OS) and a program read in the memory unit 12. Note that the CPU 11 may be a multiprocessor including a plurality of CPUs or a multi-core processor including a plurality of CPU cores, or may have a configuration including a plurality of multi-core processors.

The device for controlling the operation of the entire information processing apparatus 1 is not limited to the CPU 11, and may be, for example, any one of an MPU, a DSP, an ASIC, a PLD, and an FPGA. In addition, the device for controlling the operation of the entire information processing apparatus 1 may be a combination of two or more types of a CPU, an MPU, a DSP, an ASIC, a PLD, and an FPGA. Note that MPU is an abbreviation for micro processing unit, DSP is an abbreviation for digital signal processor, and ASIC is an abbreviation for application specific integrated circuit. In addition, PLD is an abbreviation for programmable logic device, and FPGA is an abbreviation for field programmable gate array.

Fig. 13 is a block diagram schematically illustrating a software configuration example of the information processing apparatus 1 according to the embodiment.

As illustrated in Fig. 13, the information processing apparatus 1 functions as a graph generation unit 111, a feature extraction unit 112, a check item extraction unit 113, and a table data processing unit 115.

The graph generation unit 111 acquires a plurality of pieces of relationship information (in other words, interactions) including at least two attributes of an attribute of the type of a target person, an attribute of the type of processing, and an attribute of the type of data, which are determined on the basis of the configuration of the AI system 100. The graph generation unit 111 may acquire the relationship information on the basis of an interaction set 141 that is an analysis target. The graph generation unit 111 may generate the graph structure illustrated in Fig. 3 on the basis of the acquired relationship information.

The graph generation unit 111 specifies a plurality of sets of constituents related to each other on the basis of the configuration information including the stakeholders of the AI system.

The table data processing unit 115 determines the adoption/non-adoption of the rule on the basis of the limitation condition, thereby removing a rule (in other words, a check item) that is meaningless to adopt. The table data processing unit 115 determines that a rule that is meaningless to adopt is not adopted according to the limitation condition for the component.

The table data processing unit 115 selects one or more rules from the plurality of rules on the basis of the limitation condition for the constituent.

The feature extraction unit 112 determines priorities of the plurality of pieces of relational information on the basis of the attribute of the type of the target person. The feature extraction unit 112 may determine the priorities on the basis of an important interaction extraction rule 142. The feature extraction unit 112 may increase the priority of a specific target person related to each of the plurality of pieces of relational information. The feature extraction unit 112 may increase the priority of specific relationship information among the plurality of pieces of relationship information.

The feature extraction unit 112 determines priorities of the plurality of specified sets on the basis of one or more rules selected by the table data processing unit 115.

The feature extraction unit 112 may determine the priority by adding a point corresponding to the severity of damage for each of the plurality of indexes with respect to one or more rules selected by the table data processing unit 115.

In addition, the feature extraction unit 112 may determine the priority by using a value obtained by normalizing and adding a point addition result according to the severity of damage based on the first rule created on the basis of a plurality of incidents and a point addition result according to the severity of damage based on the second rule created on the basis of an individual incident.

The check item extraction unit 113 outputs one or a plurality of check items selected on the basis of the determined priority among a plurality of check items associated with each attribute as an AI ethics check list 114 narrowed down by the AI system 100.

The check item extraction unit 113 outputs the AI ethical risk evaluation result of the AI system on the basis of the determined priority.

A process of generating the AI ethics check list in the embodiment will be described with reference to the flowchart (steps E1 to E10) of Fig. 14.

The table data processing unit 115 determines whether there is a limitation condition for the component (step E1).

In a case where there is no limitation condition for the component (see NO route of step E1), the process proceeds to steps E3 to E5.

On the other hand, when there is a limitation condition for the component (see YES route in step E1), a case having the current limitation condition in the table data related to the rule is excluded from the current search target (step E2).

The graph generation unit 111 receives, as input data, the important interaction extraction rule 142, the AI ethics check list 143, and the interaction set 141 that is an analysis target (steps E3 to E5).

The graph generation unit 111 generates a graph structure from the interaction set 141 (step E6).

The feature extraction unit 112 extracts features from the graph structure (step E7). The extraction of the features may be executed on the basis of, for example, the number of nodes of the stakeholders, the number of stakeholders having a plurality of roles, and the number of stakeholders not directly involved with the AI system 100.

The feature extraction unit 112 extracts an interaction to be noted from the extracted features on the basis of the "rule of interaction to be noted" (step E8).

The check item extraction unit 113 extracts a check item of the AI ethics check list 143 corresponding to the interaction to be noted (step E9).

The check item extraction unit 113 outputs an AI ethics check list 143 in which important items are narrowed down (step E10). The process of generating the AI ethics check list 143 ends.

[C] Effects

According to the AI system check program, the AI system check method, and the information processing apparatus 1 in the above-described embodiments, for example, the following operational effects may be achieved.

The graph generation unit 111 specifies a plurality of sets of constituents related to each other on the basis of the configuration information including the stakeholders of the AI system. The table data processing unit 115 selects one or more rules from the plurality of rules on the basis of the limitation condition for the constituent. The feature extraction unit 112 determines priorities of the plurality of specified sets on the basis of the one or more selected rules. The check item extraction unit 113 outputs the AI ethical risk evaluation result of the AI system on the basis of the determined priority.

As a result, it is possible to extract a check item with high priority according to cases in coping with the ethical risk of the AI system. Specifically, it is possible to extract a check item with higher priority according to cases by determining whether to adopt or not to adopt a rule on the basis of a limitation condition for the component of the AI system to be evaluated and removing a case that is meaningless to adopt the rule. In addition, the AI ethical influence evaluation system corresponding to the check item extraction of the AI system in a case where there is a limitation condition is able to be used commercially in a consultation or the like regarding the AI risk for an AI developer.

The feature extraction unit 112 determines the priority by adding a point corresponding to the severity of damage for each of the plurality of indexes with respect to one or more rules selected by the table data processing unit 115.

As a result, it is possible to accurately determine a priority of an interaction included in the AI system.

The plurality of indicators includes at least one of physical damage, economic damage, mental damage, and time to resolution caused by the incidents.

As a result, it is possible to finely determine a priority according to various kinds of damage caused by the incidents.

The plurality of rules include a first rule created on the basis of the plurality of incidents and a second rule created on the basis of the individual incidents.

Thus, both the generalized rule 203 and the rule 202 based on the past incident cases may be used to determine a priority of an interaction included in the AI system.

The feature extraction unit 112 determines the priority by using a value obtained by normalizing and adding a point addition result according to the severity of the damage based on the first rule and a point addition result according to the severity of the damage based on the second rule.

As a result, even in a case where both the generalized rule 203 and the rule 202 based on the past incident cases are used, it is possible to accurately determine the priority.

[D] Others

The disclosed technology is not limited to the above-described embodiments, and various modifications can be made without departing from the concept of the present embodiment. Each configuration and each process of the present embodiment can be selected or omitted as needed or may be appropriately combined.

[E] Appendix

The following appendix is further provided with respect to the above embodiment.

[Appendix 1]

An evaluation program causing a computer to execute processes of:

identifying a plurality of sets of constituents that are related to each other on the basis of configuration information including stakeholders of an artificial intelligence (AI) system;
selecting one or more rules from among a plurality of rules on the basis of a limitation condition for the constituent;
determining priorities of the plurality of specified sets on the basis of the one or more selected rules; and
outputting an AI ethical risk evaluation result of the AI system on the basis of the determined priorities.

[Appendix 2]

The evaluation program according to appendix 1, wherein
the computer further executes a process of determining the priorities by adding a point corresponding to severity of damage for each of a plurality of indexes with respect to the one or more selected rules.

[Appendix 3]

The evaluation program according to appendix 2, wherein
the plurality of indexes include at least one of physical damage, economic damage, mental damage, and time to resolution caused by incidents.

[Appendix 4]

The evaluation program according to any one of appendices 1 to 3, wherein
the plurality of rules include a first rule created on the basis of a plurality of incidents and a second rule created on the basis of an individual incident.

[Appendix 5]

The evaluation program according to appendix 4, wherein
the computer further executes a process of determining the priorities by using a value obtained by normalizing and adding a point addition result according to the severity of damage based on the first rule and a point addition result according to the severity of damage based on the second rule.

[Appendix 6]

An evaluation method of causing a computer to execute processes of:

identifying a plurality of sets of constituents that are related to each other on the basis of configuration information including stakeholders of an artificial intelligence (AI) system;
selecting one or more rules from among a plurality of rules on the basis of a limitation condition for the constituent;
determining priorities of the plurality of specified sets on the basis of the one or more selected rules; and
outputting an AI ethical risk evaluation result of the AI system on the basis of the determined priorities.

[Appendix 7]

The evaluation method according to appendix 6, wherein
the computer further executes a process of determining the priorities by adding a point corresponding to severity of damage for each of a plurality of indexes with respect to the one or more selected rules.

[Appendix 8]

The evaluation method according to appendix 7, wherein
the plurality of indexes include at least one of physical damage, economic damage, mental damage, and time to resolution caused by incidents.

[Appendix 9]

The evaluation method according to any one of appendices 6 to 8, wherein
the plurality of rules include a first rule created on the basis of a plurality of incidents and a second rule created on the basis of an individual incident.

[Appendix 10]

The evaluation method according to appendix 9, wherein
the computer further executes a process of determining the priorities by using a value obtained by normalizing and adding a point addition result according to the severity of damage based on the first rule and a point addition result according to the severity of damage based on the second rule.

[Appendix 11]

An information processing apparatus comprising a processor configured to:

identify a plurality of sets of constituents that are related to each other on the basis of configuration information including stakeholders of an artificial intelligence (AI) system;
select one or more rules from among a plurality of rules on the basis of a limitation condition for the constituent;
determine priorities of the plurality of specified sets on the basis of the one or more selected rules; and
output an AI ethical risk evaluation result of the AI system on the basis of the determined priorities.

[Appendix 12]

The information processing apparatus according to appendix 11, wherein
the processor is further configured to determine the priorities by adding a point corresponding to severity of damage for each of a plurality of indexes with respect to the one or more selected rules.

[Appendix 13]

The information processing apparatus according to appendix 12, wherein
the plurality of indexes include at least one of physical damage, economic damage, mental damage, and time to resolution caused by incidents.

[Appendix 14]

The information processing apparatus according to any one of appendices 11 to 13, wherein
the plurality of rules include a first rule created on the basis of a plurality of incidents and a second rule created on the basis of an individual incident.

[Appendix 15]

The information processing apparatus according to appendix 14, wherein
the processor is further configured to determine the priorities by using a value obtained by normalizing and adding a point addition result according to the severity of damage based on the first rule and a point addition result according to the severity of damage based on the second rule.

[Reference Signs List]

1, 6 Information processing device
10 AI service provider
11 CPU
12 Memory unit
13 Display control unit
14 Storage device
15 Input IF
16 External recording medium processing unit
17 Communication IF
20, 30 Data provider
40 User
100, 100a AI system
101 Training data
102 Loan examination model generation unit
103 Loan examination model
104 Inference data
105 Inference unit
106 Examination result
110 Training unit
111 Graph generation unit
112 Feature extraction unit
113 Check item extraction unit
114 AI ethics check list
115 Table data processing unit
120 Prediction unit
131 Display device
141 Interaction set
142 Important interaction extraction rule
143 AI ethics check list
151 Mouse
152 Keyboard
160 Recording medium
201 Damage based on past incident cases

202 Rule based on past incident cases
203 Generalized rule

## Claims

1. An evaluation program causing a computer to execute processes of:

   identifying a plurality of sets of constituents that are related to each other on the basis of configuration information including stakeholders of an artificial intelligence (AI) system;
   selecting one or more rules from among a plurality of rules on the basis of a limitation condition for the constituent;
   determining priorities of the plurality of specified sets on the basis of the one or more selected rules; and
   outputting an AI ethical risk evaluation result of the AI system on the basis of the determined priorities.

2. The evaluation program according to claim 1, wherein the computer further executes a process of determining the priorities by adding a point corresponding to severity of damage for each of a plurality of indexes with respect to the one or more selected rules.

3. The evaluation program according to claim 2, wherein the plurality of indexes include at least one of physical damage, economic damage, mental damage, and time to resolution caused by incidents.

4. The evaluation program according to any one of claims 1 to 3, wherein the plurality of rules include a first rule created on the basis of a plurality of incidents and a second rule created on the basis of an individual incident.

5. The evaluation program according to claim 4, wherein the computer further executes a process of determining the priorities by using a value obtained by normalizing and adding a point addition result according to the severity of damage based on the first rule and a point addition result according to the severity of damage based on the second rule.

6. An evaluation method of causing a computer to execute processes of:

   identifying a plurality of sets of constituents that are related to each other on the basis of configuration information including stakeholders of an artificial intelligence (AI) system;
   selecting one or more rules from among a plurality of rules on the basis of a limitation condition for the constituent;
   determining priorities of the plurality of specified sets on the basis of the one or more selected rules; and
   outputting an AI ethical risk evaluation result of the AI system on the basis of the determined priorities.

7. The evaluation method according to claim 6, wherein the computer further executes a process of determining the priorities by adding a point corresponding to severity of damage for each of a plurality of indexes with respect to the one or more selected rules.

8. The evaluation method according to claim 7, wherein the plurality of indexes include at least one of physical damage, economic damage, mental damage, and time to resolution caused by incidents.

9. The evaluation method according to any one of claims 6 to 8, wherein the plurality of rules include a first rule created on the basis of a plurality of incidents and a second rule created on the basis of an individual incident.

10. The evaluation method according to claim 9, wherein the computer further executes a process of determining the priorities by using a value obtained by normalizing and adding a point addition result according to the severity of damage based on the first rule and a point addition result according to the severity of damage based on the second rule.

11. An information processing apparatus comprising a processor configured to:

identify a plurality of sets of constituents that are related to each other on the basis of configuration information including stakeholders of an artificial intelligence (AI) system;
select one or more rules from among a plurality of rules on the basis of a limitation condition for the constituent;
determine priorities of the plurality of specified sets on the basis of the one or more selected rules; and
output an AI ethical risk evaluation result of the AI system on the basis of the determined priorities.

**12.** The information processing apparatus according to claim 11, wherein
the processor is further configured to determine the priorities by adding a point corresponding to severity of damage for each of a plurality of indexes with respect to the one or more selected rules.

**13.** The information processing apparatus according to claim 12, wherein
the plurality of indexes include at least one of physical damage, economic damage, mental damage, and time to resolution caused by incidents.

**14.** The information processing apparatus according to any one of claims 11 to 13, wherein
the plurality of rules include a first rule created on the basis of a plurality of incidents and a second rule created on the basis of an individual incident.

**15.** The information processing apparatus according to claim 14, wherein
the processor is further configured to determine the priorities by using a value obtained by normalizing and adding a point addition result according to the severity of damage based on the first rule and a point addition result according to the severity of damage based on the second rule.

FIG.1

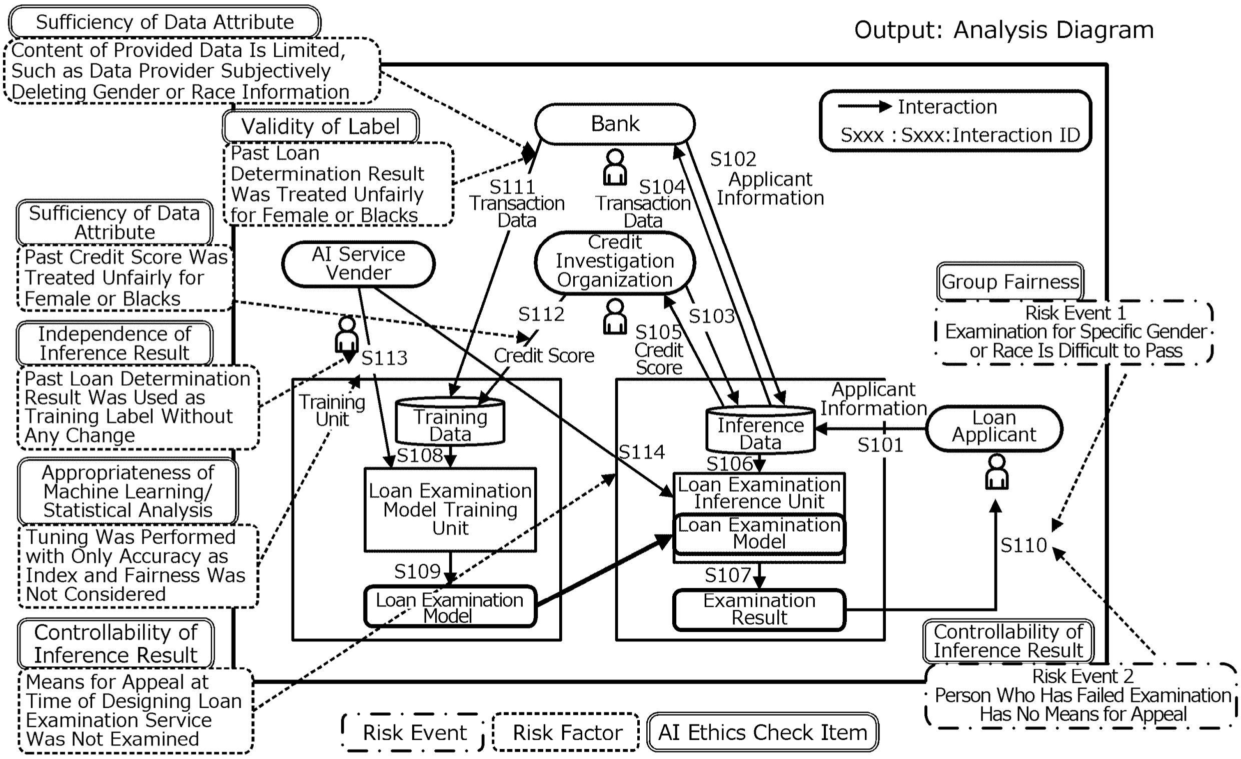

Output: Analysis Diagram
Interaction
Sxxx : Sxxx:Interaction ID
Sufficiency of Data Attribute
Content of Provided Data Is Limited, Such as Data Provider Subjectively Deleting Gender or Race Information
Validity of Label
Past Loan Determination Result Was Treated Unfairly for Female or Blacks
Sufficiency of Data Attribute
Past Credit Score Was Treated Unfairly for Female or Blacks
Independence of Inference Result
Past Loan Determination Result Was Used as Training Label Without Any Change
Appropriateness of Machine Learning/ Statistical Analysis
Tuning Was Performed with Only Accuracy as Index and Fairness Was Not Considered
Controllability of Inference Result
Means for Appeal at Time of Designing Loan Examination Service Was Not Examined
Bank
S111 Transaction Data
S104 Transaction Data
S102 Applicant Information
AI Service Vender
Credit Investigation Organization
S112 Credit Score
S113
S105 Credit Score
S103
Training Unit
Training Data
S108
Loan Examination Model Training Unit
S109
Loan Examination Model
S114
Inference Data
S106
Loan Examination Inference Unit
Loan Examination Model
S107
Examination Result
Applicant Information
S101
Loan Applicant
S110
Group Fairness
Risk Event 1
Examination for Specific Gender or Race Is Difficult to Pass
Controllability of Inference Result
Risk Event 2
Person Who Has Failed Examination Has No Means for Appeal
Risk Event
Risk Factor
AI Ethics Check Item

FIG.2

Example of Interaction of Loan Examination AI

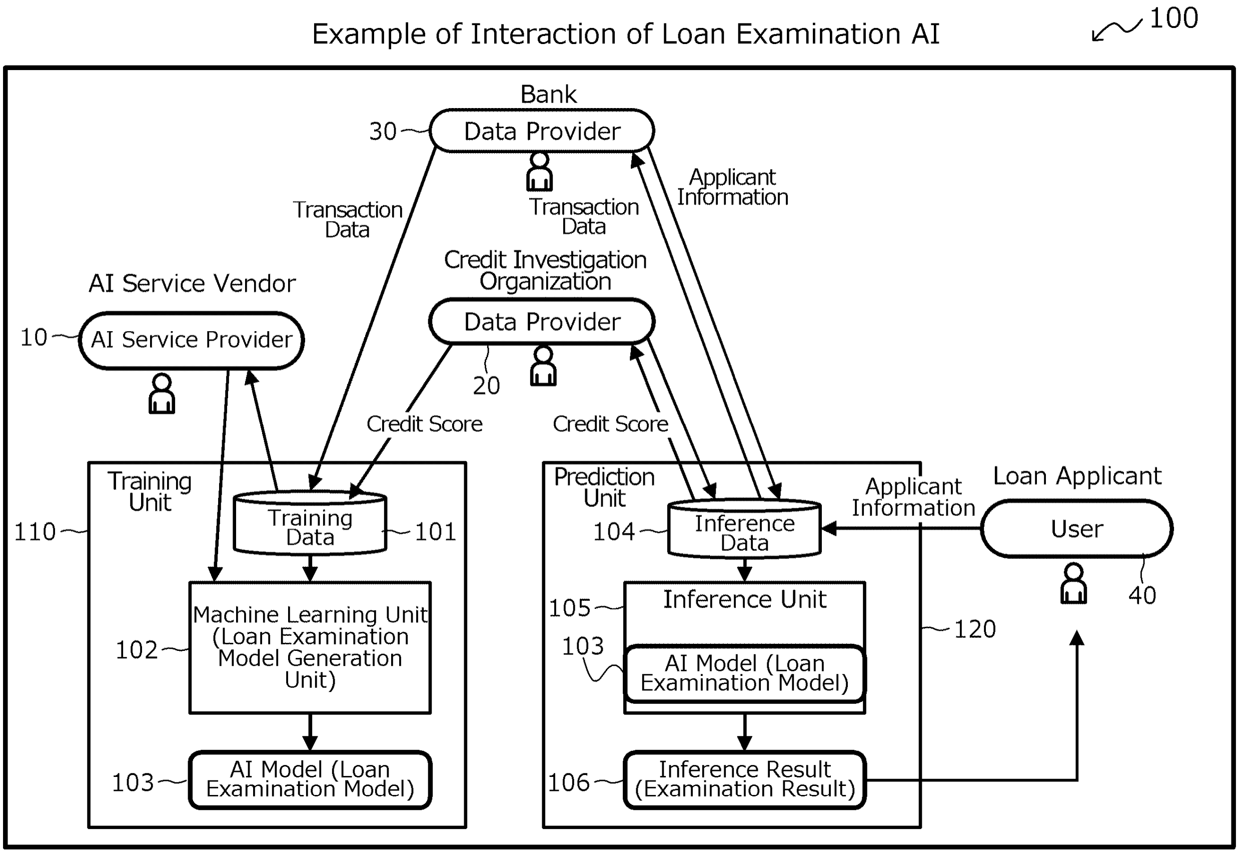

FIG.3

A1

| Interaction ID | Stakeholder 1 | | | | Stakeholder 2 | | | | System Component 1 | | | System Component 2 | | | Data Type | | |
|---|---|---|---|---|---|---|---|---|---|---|---|---|---|---|---|---|---|
| | Type | Name | Role Explanation | Start Point (0) /End Point (1) | Type | Name | Role Explanation | Start Point (0) /End Point (1) | Type | Name | Start Point (0) /End Point (1) | Type | Name | Role Explanation | Start Point (0) /End Point (1) | Name | Start Point (0) /End Point (1) |
| S101 | User | Loan Applicant | Provision of Applicant Information | 0 | – | – | – | - | – | – | - | – | – | - | Inference Data | Applicant Information /Transaction Data /Credit Score | 1 |
| S102 | AI System Provider | Bank | Provision of Applicant Information | 1 | – | – | – | - | – | – | - | – | – | - | Inference Data | Applicant Information /Transaction Data /Credit Score | 0 |
| S103 | Data Provider | Credit Investigation Organization | Provision of Applicant Information | 1 | – | – | – | - | – | – | - | – | – | - | Inference Data | Applicant Information /Transaction Data /Credit Score | 0 |
| S104 | AI System Provider | Bank | Provision of Transaction Data of Applicant | 0 | – | – | – | - | – | – | - | – | – | - | Inference Data | Applicant Information /Transaction Data /Credit Score | 1 |
| S105 | Data Provider | Credit Investigation Organization | Provision of Credit Score of Applicant | 0 | – | – | – | - | – | – | - | – | – | - | Inference Data | Applicant Information /Transaction Data /Credit Score | 1 |
| S106 | – | – | – | - | – | – | – | - | AI Model | Loan Examination Inference Unit | 1 | – | – | - | Inference Data | Applicant Information /Transaction Data /Credit Score | 0 |
| S107 | – | – | – | - | – | – | – | - | AI Model | Loan Examination Inference Unit | 0 | – | – | - | Inference Result | Examination Result | 1 |

Role ~A11

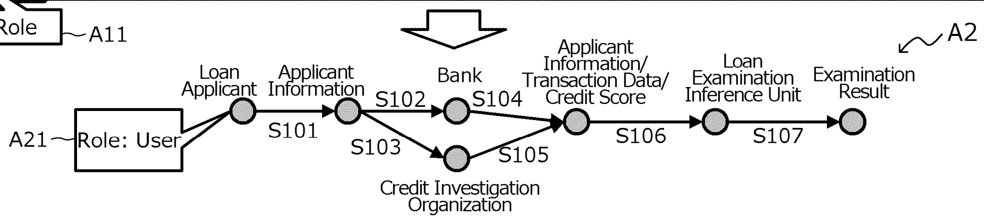

FIG. 4

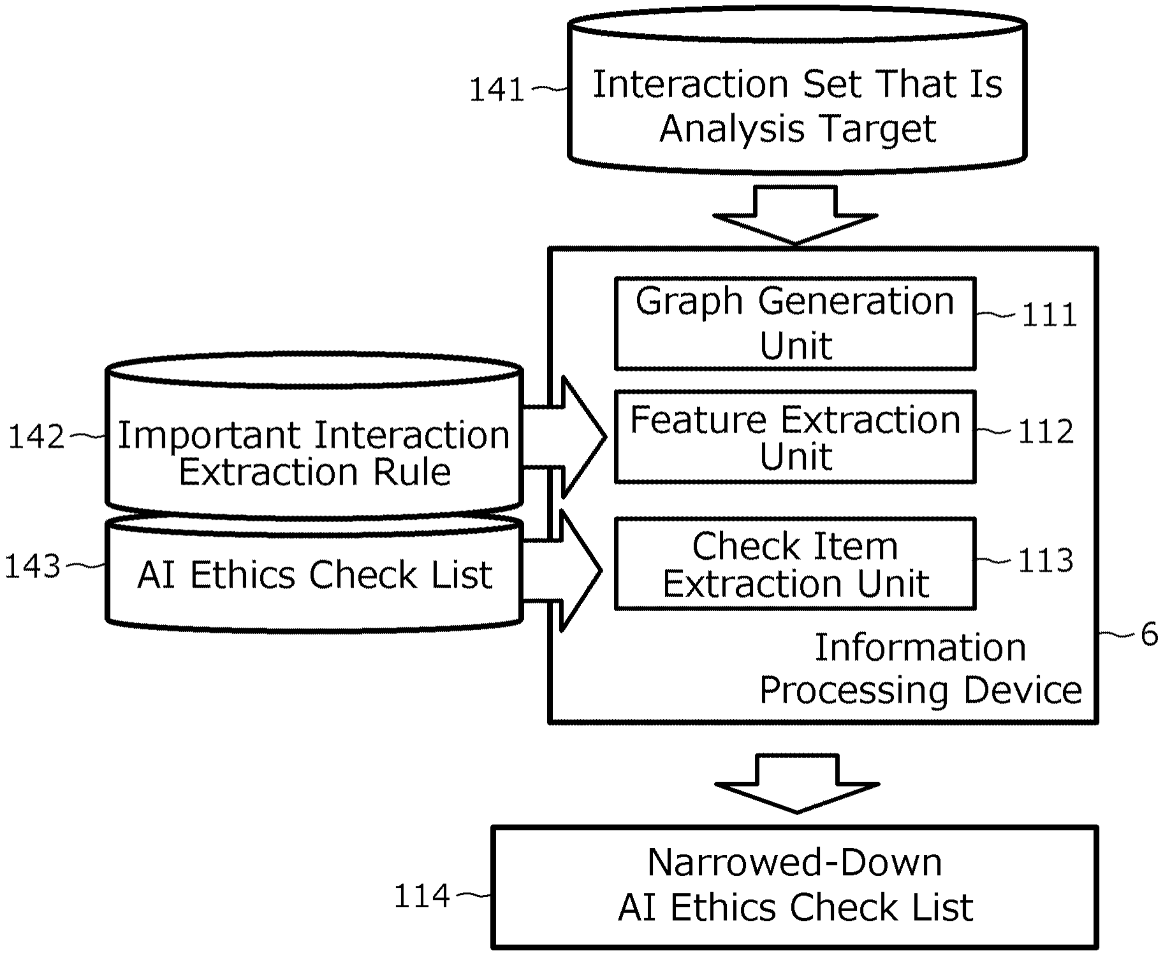
141
Interaction Set That Is Analysis Target
Graph Generation Unit
111
142
Important Interaction Extraction Rule
Feature Extraction Unit
112
143
AI Ethics Check List
Check Item Extraction Unit
113
Information Processing Device
6
114
Narrowed-Down AI Ethics Check List

FIG. 5

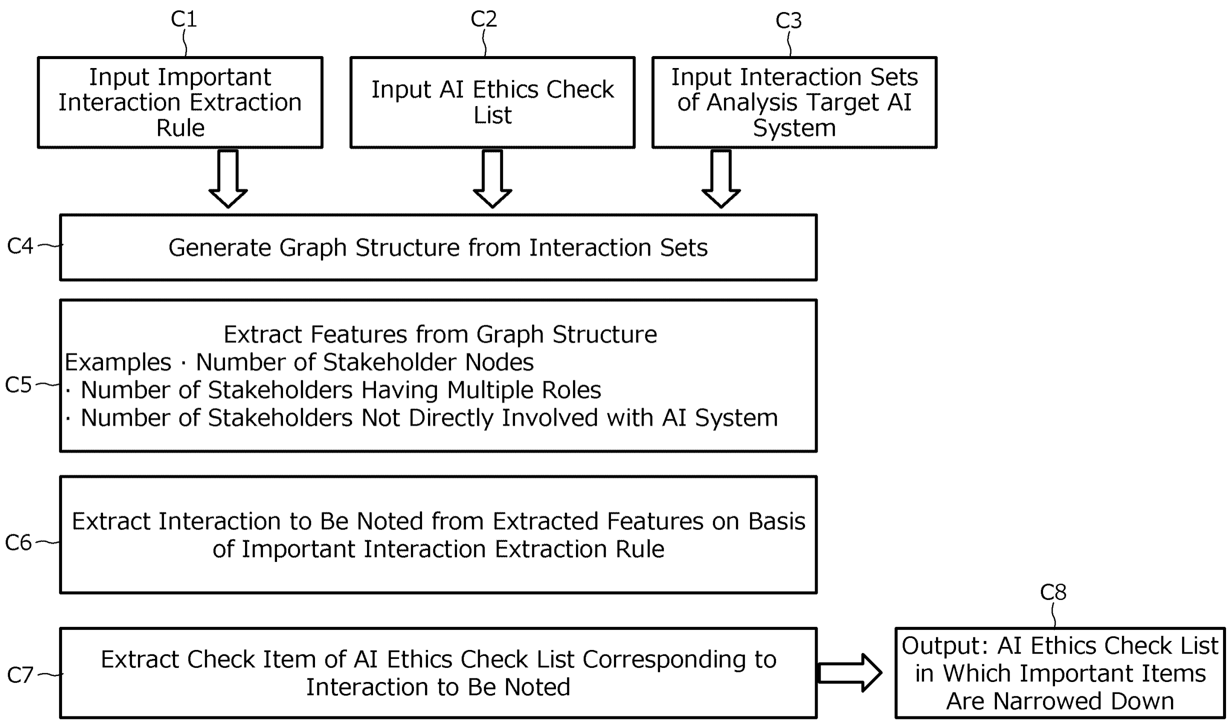
C1
Input Important Interaction Extraction Rule
C2
Input AI Ethics Check List
C3
Input Interaction Sets of Analysis Target AI System
C4
Generate Graph Structure from Interaction Sets
C5
Extract Features from Graph Structure
Examples · Number of Stakeholder Nodes
· Number of Stakeholders Having Multiple Roles
· Number of Stakeholders Not Directly Involved with AI System
C6
Extract Interaction to Be Noted from Extracted Features on Basis of Important Interaction Extraction Rule
C7
Extract Check Item of AI Ethics Check List Corresponding to Interaction to Be Noted
C8
Output: AI Ethics Check List in Which Important Items Are Narrowed Down

FIG. 6

Damage Based on Past Incident Cases

201

| Item | Item Example | Specific Example |
|---|---|---|
| Severity of Damage (Physical Damage) | High | Human Life Was Lost |
| | Medium | Humans Are Injured or at Risk of Injury |
| | Low | Slight and Limited Risk Occurred or Almost Occurred |
| Severity of Damage (Economic Damage) | High | Loss of Several Hundred Million to Several Trillion Yen |
| | Medium | Loss of Several Million to Several Ten Million Yen |
| | Low | Loss of Several Ten Thousand to Several Hundred Thousand Yen Occurred or Almost Occurred |
| Severity of Damage (Response Time to Resolution) | Long | It Takes Two to Three Years or More |
| | Medium | It Takes Unit of Half to One Year |
| | Short | It Takes Several Months or It Almost Took Several Months |
| Unequal Damage (Example: Fairness, Privacy) | Race | Caucasian/Blacks |
| | Gender | Male/Female |
| | Religion | Christianity/Islam/Judaism |
| | Country of Origin/Immigration | Ukraine/Russia |
| | Age | Sixty Years Old |
| | Ideology | Republican Party Person |
| | Property | Poor/Rich |
| | History | Criminal History, Bankruptcy Information |
| | Physical Condition | Pregnant, Serious Illness |
| | Sexual Orientation | LGBT Etc. |
| | Others | (Specific Description) |

FIG.7

Rule Based on Past Incident Cases

202

| Number | Risk of AI System | | | | | | Limitation Condition | Information of Interaction in System Diagram | |
|---|---|---|---|---|---|---|---|---|---|
| | Case Name | Severity of Damage | | | | Unequal Damage (Fairness Item) | | Interaction Start Point Type | Interaction End Point Type |
| | | Physical Damage | Economic Damage | Mental Damage | Response Time to Resolution | | | | |
| **001** | Accident of Medical Assistant AI | High | Medium | High | Long | None | None | AI Model | Inference Result |
| **002** | Cold Treatment in Loan Examination AI | Low | High | Medium | Short | Gender | Gender Limitation | Inference Result | Consumer User |
| **003** | Crime Prediction AI | Low | Low | Low | Medium | Race | Race Limitation | AI Model | Inference Result |
| **...** | ... | ... | ... | ... | ... | ... | ... | ... | ... |
| **328** | Racist Remarks at BOT | Low | Low | High | Medium | Nationality | Nationality Limitation | Inference Result | Consumer User |

FIG. 8

203

Generalized Rule

| Number | Generalized Rule Name | Limitation Condition | Information of Interaction in System Diagram | |
|---|---|---|---|---|
| | | | Interaction Start Point Type | Interaction End Point Type |
| 0001 | Stakeholder (1) Having User Role | None | Inference Result | Business User |
| 0002 | Stakeholder (2) Having User Role | Male and Female, Race, Nationality | Business User | Consumer User |
| | … | … | … | … |
| 2100 | Stakeholder Having Training Data Provider Role | Ideology, Physical Condition | Training Data Providing Source | Training Data Provider |

FIG. 9

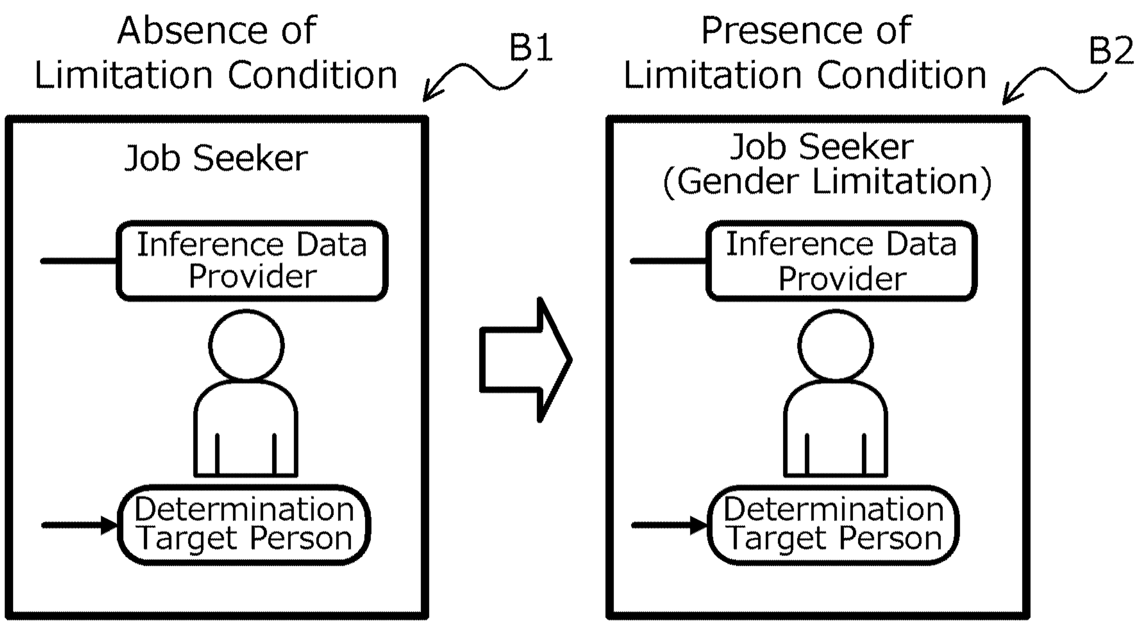
Absence of
Limitation Condition
B1
Job Seeker
Inference Data
Provider
Determination
Target Person
Presence of
Limitation Condition
B2
Job Seeker
(Gender Limitation)
Inference Data
Provider
Determination
Target Person

FIG. 10

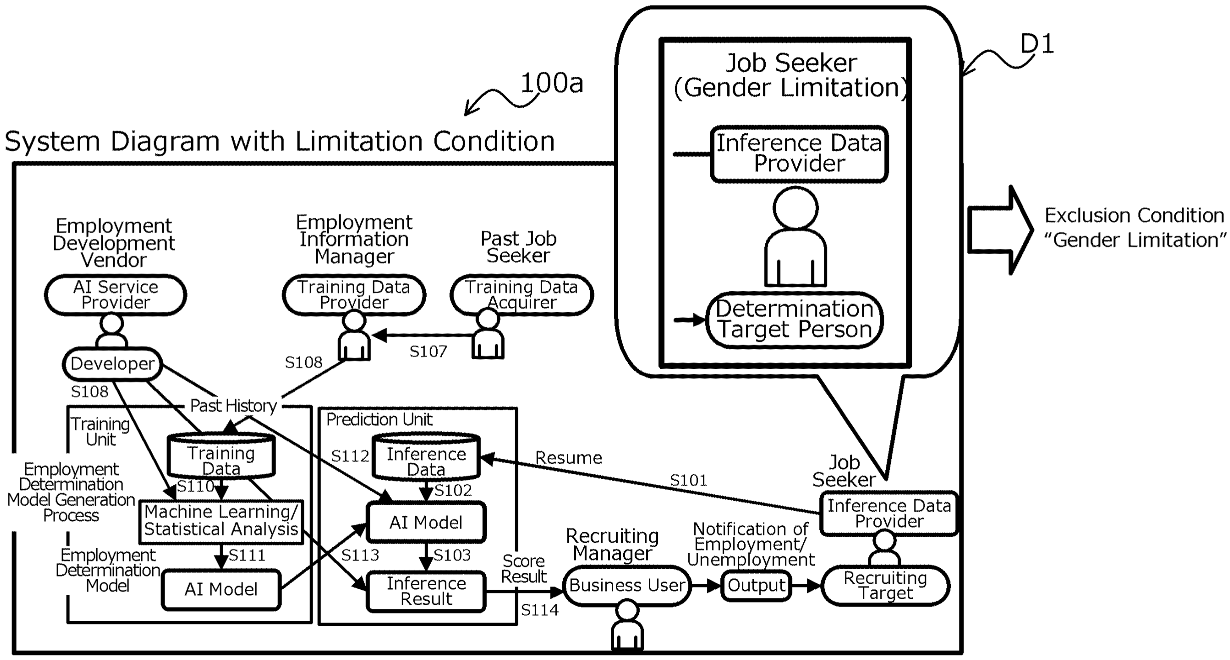
100a
D1
System Diagram with Limitation Condition
Job Seeker
(Gender Limitation)
Inference Data Provider
Determination Target Person
Exclusion Condition
"Gender Limitation"
Employment Development Vendor
AI Service Provider
Developer
Employment Information Manager
Training Data Provider
Past Job Seeker
Training Data Acquirer
S107
S108
S108
Past History
Training Unit
Training Data
Employment Determination Model Generation Process
S110
Machine Learning/ Statistical Analysis
S111
Employment Determination Model
AI Model
Prediction Unit
S112
Inference Data
S102
AI Model
S113
S103
Inference Result
Score Result
S114
Resume
S101
Job Seeker
Inference Data Provider
Recruiting Manager
Business User
Notification of Employment/ Unemployment
Output
Recruiting Target

FIG. 11

Rule Based on Past Incident Cases

202

| **Number** | **Risk of AI System** | | | | | | **Limitation Condition** | **Information of Interaction in System Diagram** | |
|---|---|---|---|---|---|---|---|---|---|
| | Case Name | Severity of Damage | | | | Unequal Damage (Fairness Item) | | Interaction Start Point Type | Interaction End Point Type |
| | | Physical Damage | Economic Damage | Mental Damage | Response Time to Resolution | | | | |
| **001** | Accident of Medical Assistant AI | High | Medium | High | Long | None | None | AI Model | Inference Result |
| **002** | Cold Treatment in Loan Examination AI | Low | High | Medium | Short | Gender | Gender Limitation | Inference Result | Consumer User |
| **003** | Crime Prediction AI | Low | Low | Low | Medium | Race | Race Limitation | AI Model | Inference Result |
| **...** | ... | ... | ... | ... | ... | ... | ... | ... | ... |
| **328** | Racist Remarks at BOT | Low | Low | High | Medium | Nationality | Nationality Limitation | Inference Result | Consumer User |

D2

FIG. 12

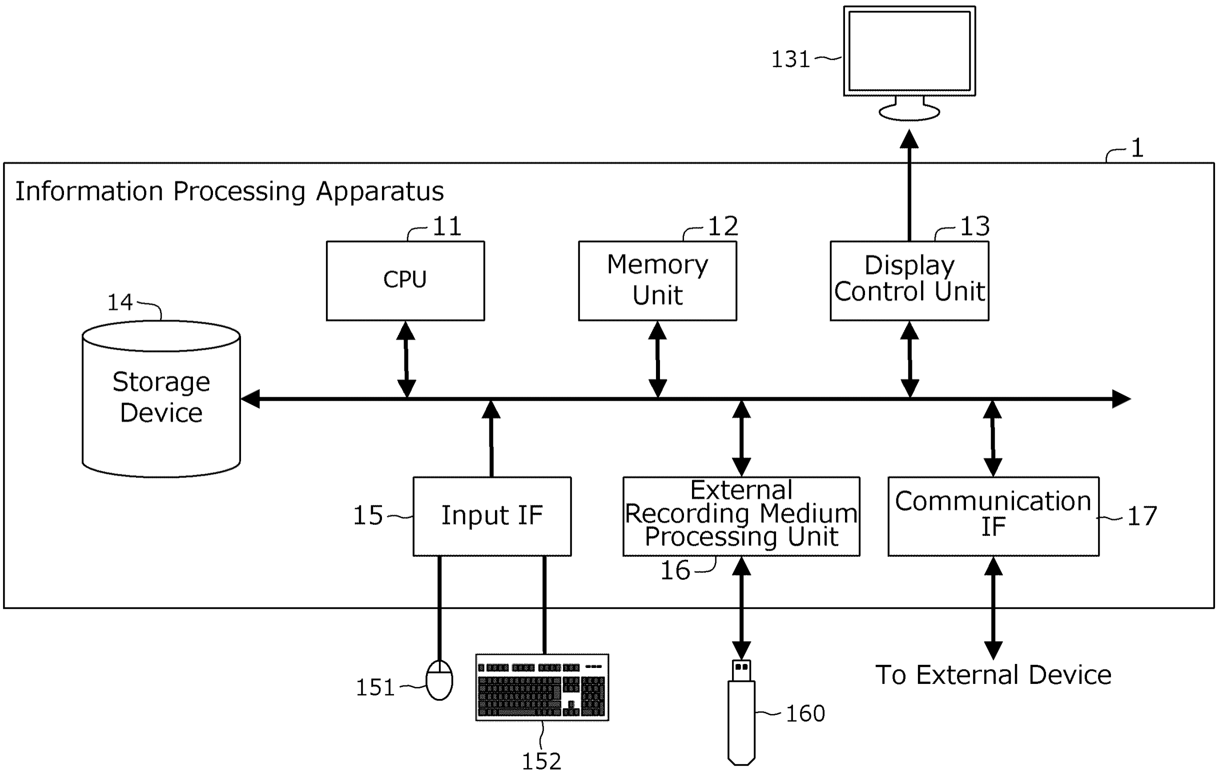

131
1
Information Processing Apparatus
11
CPU
12
Memory Unit
13
Display Control Unit
14
Storage Device
15
Input IF
External Recording Medium Processing Unit
16
Communication IF
17
151
152
160
To External Device

FIG. 13

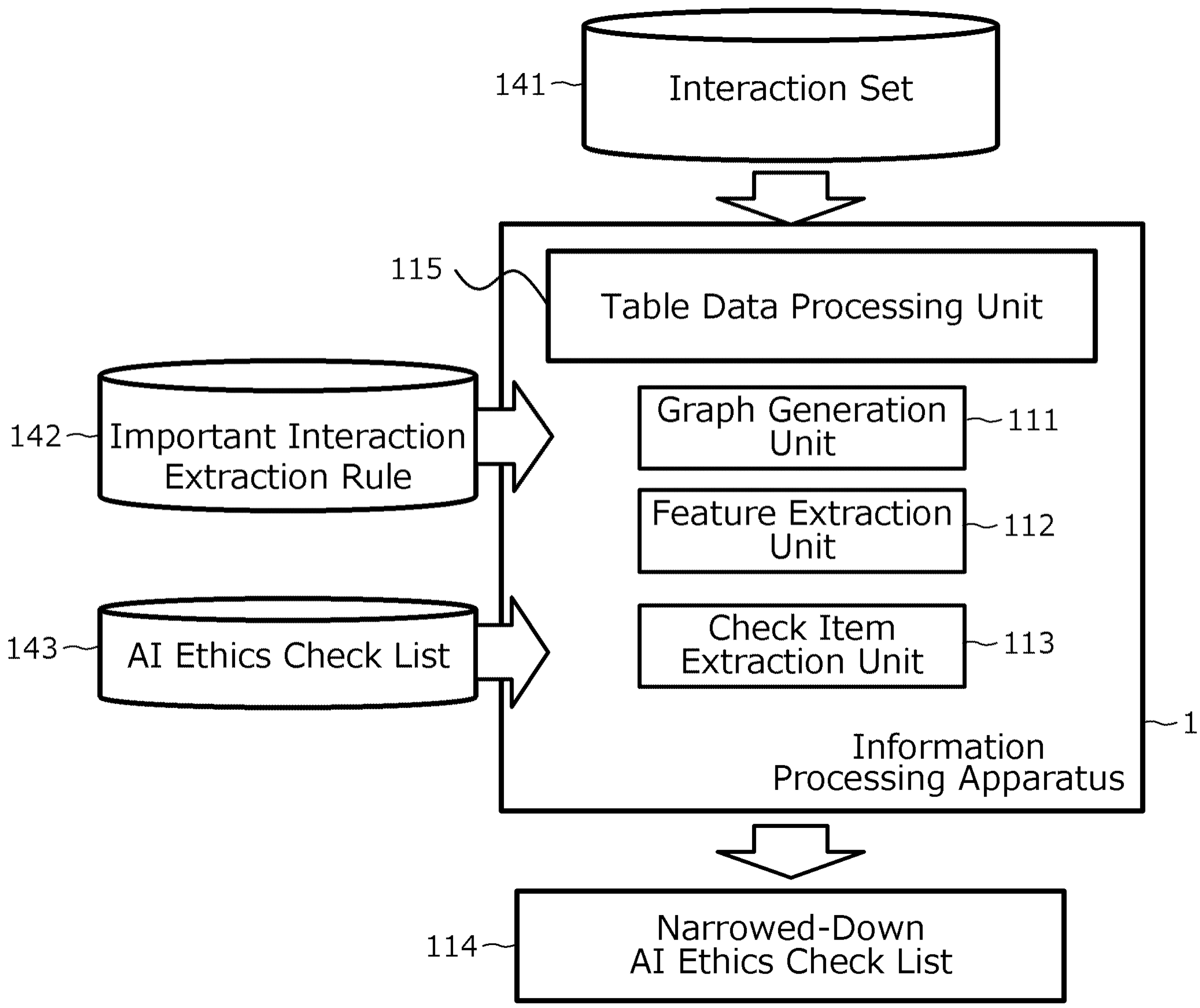
141
Interaction Set
115
Table Data Processing Unit
142
Important Interaction Extraction Rule
Graph Generation Unit
111
Feature Extraction Unit
112
143
AI Ethics Check List
Check Item Extraction Unit
113
1
Information Processing Apparatus
114
Narrowed-Down AI Ethics Check List

FIG. 14

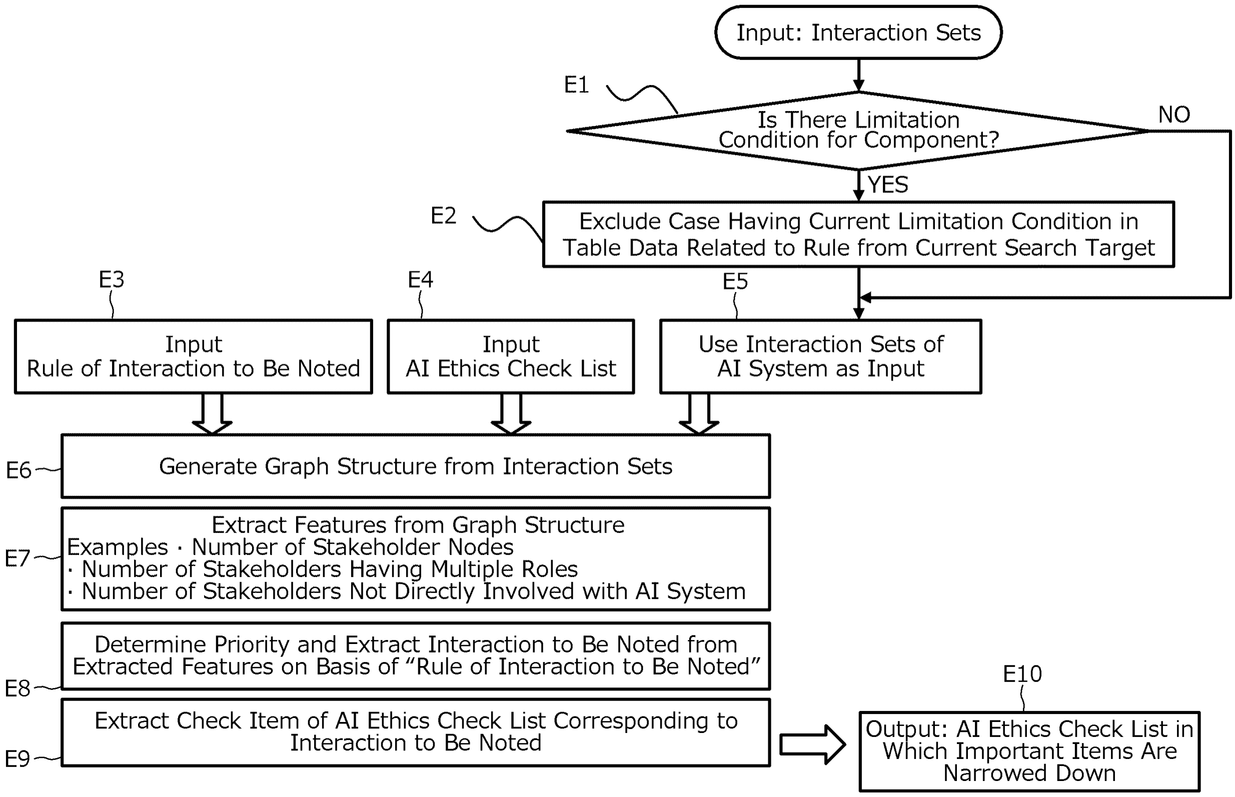

Input: Interaction Sets
E1
Is There Limitation Condition for Component?
NO
YES
E2
Exclude Case Having Current Limitation Condition in Table Data Related to Rule from Current Search Target
E3
Input
Rule of Interaction to Be Noted
E4
Input
AI Ethics Check List
E5
Use Interaction Sets of AI System as Input
E6
Generate Graph Structure from Interaction Sets
E7
Extract Features from Graph Structure
Examples · Number of Stakeholder Nodes
· Number of Stakeholders Having Multiple Roles
· Number of Stakeholders Not Directly Involved with AI System
E8
Determine Priority and Extract Interaction to Be Noted from Extracted Features on Basis of "Rule of Interaction to Be Noted"
E9
Extract Check Item of AI Ethics Check List Corresponding to Interaction to Be Noted
E10
Output: AI Ethics Check List in Which Important Items Are Narrowed Down

## INTERNATIONAL SEARCH REPORT

International application No.
**PCT/JP2024/004236**

### A. CLASSIFICATION OF SUBJECT MATTER

***G06N 20/00***(2019.01)i; ***G06F 11/36***(2006.01)i; ***G06Q 10/0635***(2023.01)i
FI: G06N20/00; G06F11/36 104; G06Q10/0635

According to International Patent Classification (IPC) or to both national classification and IPC

### B. FIELDS SEARCHED

Minimum documentation searched (classification system followed by classification symbols)

G06N3/00-99/00; G06F11/36; G06F16/00-16/958; G06Q10/0635

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | 新田 泉 ほか, 倫理的なAIシステムの実現に向けて-AI倫理影響評価法の提案-, 2022年度人工知能学会全国大会(第36回)論文集 [online], 2022, Session ID: 2J6-OS-24b-05, pp. 1-4, [retrieved on 01 August 2022], Internet: <URL: https://www.jstage.jst.go.jp/article/pjsai/JSAI2022/0/JSAI2022_2J6OS24b05/_pdf/-char/ja>, <DOI:10.11517/pjsai.JSAI2022.0_2J6OS24b05>, (NITTA, Izumi et al., Towards the realization of the ethical AI system: AI Ethics Impact Assessment Method, Proceedings of the 36th Annual Conference of JSAI 2022)<br>chapters 3, 4 | 1-15 |
| A | WO 2021/161896 A1 (SONY GROUP CORPORATION) 19 August 2021 (2021-08-19)<br>paragraphs [0002]-[0009], [0081]-[0113], fig. 11-13 | 1-15 |

☐ Further documents are listed in the continuation of Box C.

☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **03 April 2024** | **16 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/004236**

| Patent document cited in search report | Publication date (day/month/year) | Patent family member(s) | Publication date (day/month/year) |
|---|---|---|---|
| WO 2021/161896 A1 | 19 August 2021 | US 2023/0063311 A1<br>paragraphs [0002]-[0013], [0201]-[0285], fig. 11-13 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020240981 A
- JP 2018190182 A
- WO 2021199201 A


### Non-patent literature cited in the description


- **TAKASHI MATSUMOTO** ; **ARISA EMA**. *Proposal of Risk Chain Mod el to Examine Risk Reduction in AI Services*, 04 June 2020, <URL:ifi.u-tokyo.ac.jp/wp/wp-content/uploads/2020/06/ policy_recommendation_tg_20200604.pdf>